# EUROPEAN PATENT SPECIFICATION

(11) **EP 4 588 951 B1**
(45) Date of publication and mention of the grant of the patent: **22.04.2026**
(21) Application number: 24152340.6
(22) Date of filing: 17.01.2024
(51) Int. Cl.: C08G 59/24, C08G 59/50, B29C 73/00, C08J 5/24

(54) **REPROCESSABLE COMPOSITE**
WIEDERVERARBEITBARER VERBUNDSTOFF
COMPOSITE POUVANT ÊTRE RETRAITÉ

(43) Date of publication of application: 23.07.2025
(73) Proprietor: Allnex Belgium, S.A., 1620 Drogenbos (BE)
(72) Inventor: VAN DEN BERGEN, Hugues, 1620 Drogenbos (BE); ROOSE, Patrice, 1600 Sint Pieters Leeuw (BE); SCHALLERT, Viktor, 8047 Graz (AT); RATZENBOCK, Karin, 4040 Linz (AT); SLUGOVC, Christian, 8010 Graz (AT); EDINGER, David, 8020 Graz (AT); NEIRYNCK, Katrien, 1980 Eppegem (BE); ZHANG, Huiyi, 5504 MD Veldhoven (NL); LUNZER, Florian, 1000 Brussels (BE)
(74) Representative: Allnex Belgium S.A.

(56) References cited:
- WO-A1-2012/148815
- US-A1- 2023 067 778
- MEMON HAFEEZULLAH ET AL: "Recyclable and reformable epoxy resins based on dynamic covalent bonds - Present, past, and future", POLYMER TESTING, ELSEVIER, AMSTERDAM, NL, vol. 105, 10 November 2021 (2021-11-10), XP086875923, ISSN: 0142-9418, [retrieved on 20211110], DOI: 10.1016/J.POLYMERTESTING.2021.107420
- WU MING-SUNG ET AL: "A recyclable epoxy for composite wind turbine blades", vol. 5, no. 3, 3 July 2019 (2019-07-03), pages 114 - 127, XP093040044, ISSN: 2055-0340, Retrieved from the Internet <URL:https://tandfonline.com/doi/pdf/10.1080/20550340.2019.1639967> [retrieved on 20240603], DOI: 10.1080/20550340.2019.1639967

## Description

### Technical field

The present invention relates to a reprocessable composite comprising a reinforcing material and a cured resin material, which composite can be reprocessed by thermal treatment. It further relates to a method for producing a reprocessed composite, the reprocessed composite, the use of such reprocessable and reprocessed composite, and the curable resin composition.

### Background

Thermoplastics are made of linear covalently bond polymer chains, which are held together by weak interactions (e.g., van der Waals forces). The weak intermolecular interactions lead to easy processing by melting (or in some cases also from solution), but also make the polymer susceptible to creep under constant load. Thermoplastics can be deformed irreversibly above their glass transition temperature (Tg) or their crystalline melting point and be processed by extrusion, injection molding, and welding.

Thermosets are made of molecular chains which are interconnected by covalent bonds to form a stable network providing them outstanding mechanical properties and thermal and chemical resistance. They are an indispensable part of many applications such as structural components in automotive and aircraft industries. Due to their irreversible linking by covalent bonds, reshaping is not possible once the polymerization is completed. Therefore, they must be polymerized in the desired shape, which is time-consuming, restricts the shape and is responsible for their high price.

Associative covalent adaptable networks (CAN - polymers) or vitrimers provide polymer networks that are closely resembling thermosets but have dynamic covalent bonds in the polymer network which bonds after applying a stimulus such as heat and/or pressure, can be reversible exchanged with other functional groups allowing the polymer network to rearrange its topology while maintaining a similar cross-link density. Vitrimers are thermoset -like materials that are reprocessable whereby after applying a stimulus such as heat can be reprocessed into new thermoset-like materials having high performances. Vitrimers combine the desirable properties of both classes: they have the mechanical and thermal properties of thermosets and can be also reshaped molded upon heating.

Fiber reinforced thermoset composites comprise fibers and a resin material wherein fibers are embedded in a crosslinked network which cannot be reshaped or welded due to its highly cross-linked nature. Welding and reshaping reinforced composites is possible in thermoplastic composites, which have lower mechanical performances and worse chemical resistance compared to thermoset composites as thermoplastics corrode easily by chemical and mechanical stress.

US 2023/0067778 A1 is related to compositions comprising an epoxy-derived covalent adaptable network, to methods for producing said compositions and to composites comprising said compositions.

Several types of vitrimers have been described already, but there is still a need for providing new types of vitrimers that can be used in reinforced composites.

It is an object of the present invention to provide reprocessable composites that are thermoset -like and have vitrimer behaviour, which do not display one or more of the previously described disadvantages.

### Summary of the invention

In a first aspect, present invention relates to a reprocessable composite comprising a reinforcing material and a cured resin material, wherein the cured resin material is obtainable by curing a resin composition comprising a mixture of
- epoxy compounds comprising at least two, preferably two, epoxy groups;
- aliphatic, cycloaliphatic and/or aromatic polyamine compounds wherein each of them comprises at least 3, preferably 4 active amine hydrogens;
- acrylate monomers comprising at least two, preferably two or three acrylate groups;
wherein the equivalent ratio of the epoxy groups/acrylate groups/active amine hydrogens present in the mixture is between 0.8/0.2/1 and 0.2/0.8/1 respectively, preferably between 0.8/0.2/1 and 0.3/0.7/1.

According to a second aspect, present invention relates to a method for producing a reprocessed composite of the first aspect comprising the steps of
- bringing the reprocessable composite of the first aspect to a higher temperature preferably a temperature of at least 50°C above the Tg of the cured resin;
- reprocessing the composite that is at a higher temperature;
- cooling to obtain the reprocessed composite.

In a third aspect, present invention relates to the reprocessed composite obtainable by the method of the second aspect.

In yet another aspect, present invention relates to the use of the reprocessable composite of the first aspect or the reprocessed composite of the third aspect in wind turbine blades, automotive components, public transportation vehicles, reinforcing bars, components of marine infrastructure, boat hulls, bathtubs, swimming pool panels, aircraft wings, bicycle frames, sports equipment, electronic application, aeronautical components, aerospace components, consumer goods, structural adhesives, protective equipment or construction. In yet another aspect, present invention relates to a curable a resin composition comprising a mixture of epoxy compounds comprising at least two, preferably two, epoxy groups; aliphatic, cycloaliphatic and/or aromatic polyamine compounds wherein each of them comprises at least 3, preferably 4 active amine hydrogens; acrylate monomers comprising at least two, preferably two or three acrylate groups; wherein the equivalent ratio of the epoxy groups/ acrylate groups/ active amine hydrogens present in the mixture is between 0.8/0.2/1 and 0.2/0.8/1, preferably between 0.8/0.2/1 and 0.3/0.7/1.

### Figures

Figure 1: shows the stress relaxation curve of cured samples CD000 and CD001 as discussed in the example section, where G(t)/G₀ is plotted against time (minutes). The top curve shows the stress decay for the sample CD000 whereas the lower curve shows the stress decay for CD001 along with the exponential fit. The plot also indicates the parameter B and the stress relaxation time τ for CD001.
Figure 2: shows pictures of hot embossed cured samples CD000 and CD001 using a crosshatched steel plate 8 mm (shown in first picture) at a normal force of F_{N} = 40N (≈ 0.8 MPa).
Figure 3: shows pictures of cured samples CD000 and CD001 and cured composite samples comprising 20wt% chopped fibers (CD000-CGF20 and CD001-CGF20) after hot bending.

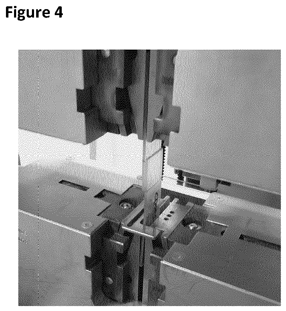

Figure 4: shows a picture of a welded sample undergoing lap shear strength test as discussed in the example section.

### Detailed description

The first aspect is related to a reprocessable composite comprising a reinforcing material and a cured resin material, wherein the cured resin material is obtainable by curing a resin composition comprising a mixture of
- epoxy compounds comprising at least two, preferably two, epoxy groups;
- aliphatic, cycloaliphatic and/or aromatic polyamine compounds wherein each of them comprises at least 3, preferably 4 active amine hydrogens;
- acrylate monomers comprising at least two, preferably two or three acrylate groups;
wherein the equivalent ratio of the epoxy groups/acrylate groups/active amine hydrogens present in the mixture is between 0.8/0.2/1 and 0.2/0.8/1, preferably between 0.8/0.2/1 and 0.3/0.7/1.

It is found that the composites according to the invention are easily reprocessable at higher temperatures. Further, the cured composite resins have a low stress relaxation time, when measured using rheology. The stress relaxation time may be even less than 40 minutes at 180°C, or much shorter. The composite is able to undergo deformation and can take on a new shape during reprocessing operations. It is further found that the initial stress relaxation values (G₀) differ only marginally when using different temperatures during the rheology tests, which means that the decline in relaxation modulus over time is mainly influenced by bond reformation rather than by the thermal properties of the residual material, which indicates that the reprocessable composites have vitrimer behaviour.

The equivalent ratio of the epoxy groups/acrylate groups/active amine hydrogens present in the mixture should be between 0.8/0.2/1 and 0.2/0.8/1, preferably between 0.8/0.2/1 and 0.3/0.7/1. In case that the relative amount of acrylate groups is higher this would result in a cured material with a very low Tg. Such material may become too soft for any composite application. Further, in case the relative amount of epoxy groups is higher than the indicated range, the relaxation time at increased temperatures will be too high and the cured material will lose its dynamic vitrimer behaviour.

As used herein, "reprocessable composite" refers to a composite that under certain conditions, such as higher temperatures and/or higher pressure applied on the composite, the composite can be reprocessed, whereby the reprocessed composite still keeps its mechanical and/or chemical integrity. Reprocessable composites are composites whereby at least part of the cured resin material has vitrimer behaviour. Reprocessed composites typically may have no or a minor shift in the Tg, such as less than 10 °C. Reprocessed composites typically may have a similar cross-link density as the composite before reprocessing.

As used herein "reprocessing" comprises reshaping, embossing, welding, recycling or repairing.

### The cured resin material

The cured resin material together with the reinforcing material forms the reprocessable composite. In this application, when features or parameters of the cured resin material are described, it is of the material without the presence of the reinforcing material, and is also sometimes referred to as neat resin material. In case the features of the composite comprising both the reinforced material and the cured resin material, then this will be indicated.

The resin composition according to the invention comprises a mixture of an epoxy compounds; aliphatic, cycloaliphatic and/or an aromatic polyamine compounds; and acrylate monomers. Upon mixing the three compounds together, the curing reaction may already start. The reaction rate can be increased by heating the mixture.

The equivalent ratio of the epoxy groups/ acrylate groups/ active amine hydrogens present in the mixture is between 0.8/0.2/1 and 0.2/0.8/1, preferably between 0.8/0.2/1 and 0.3/0.7/1. The ratio can be selected depending on the properties the material should have. In case the Tg of the material should be higher, the relative amount of the acrylate groups is rather low. In case the relaxation time of the cured material should be lower, it can be more optimal to use a higher amount of relative acrylate groups. A person skilled in the art will be able to select the right ratio. The properties of the material will also vary depending on the type of compounds that are selected.

In one embodiment, the cured resin material has a Tg of at least 20°C, preferably at least 50 °C, even more preferably at least 70, or 80 °C, whereby the glass transition temperature (Tg) is measured using differential scanning calorimetry (DSC) according to ASTM D 3418.

In another embodiment, the cured resin material has a stress relaxation time τ of less than 40 minutes, such as below 35 minutes, where the stress relaxation time is measured by rheology at 180 °C.

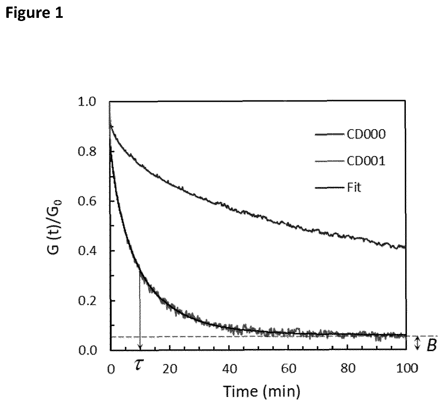

As used herein, the "stress relaxation" is measured following a rheology procedure at 180°C. The shear stress response of a material is monitored over time at a fixed shear deformation. The measurements are conducted using a MCR302 rheometer in a parallel plate configuration using a sanded upper plate with a diameter of 8 mm where the gap is adjusted to fit a sample disc with a thickness in the range 1-2 mm and a cross section of 8 mm. After loading the sample at 180°C, a shear strain of 0.5% is applied and maintained for 120 min in isothermal conditions. The stress-relaxation data are fitted to an exponential expression of the form *G*(*t*) *= G*_{∞} *+* (*G*₀ *- G*_{∞})*e*^{*-t*/}*^{τ} = G*₀(*B +* (1 *- B*)*e*^{*-t*/*τ*}) in order to estimate the stress relaxation time *τ* and the parameter *B* which corresponds to the ratio of *G*_{∞}/*G*₀ where *G*₀ is the unrelaxed (initial) modulus at time zero and *G*_{∞} is the relaxed (final) modulus at infinite time. The ratio between initial and final modulus is provided by the inverse of *B* (namely *B*⁻¹ *= G*₀/*G*_{∞})*.* Figure 1 shows an example of such stress relaxation data fit.

In yet another embodiment the cured resin material has a reciprocal value *B*⁻¹ of 2 or more, preferably 5 or more wherein the value B corresponds to the ratio of *G*_{∞}/*G*₀ where *G*₀ is the unrelaxed (initial) modulus at time zero and *G*_{∞} is the relaxed (final) modulus at infinite time, whereby the stress relaxation time is measured by rheology at 180°C.

In a preferred embodiment, the cured resin has a reciprocal value *B*⁻¹ composition of 2, preferably 5 or more and a stress relaxation time τ of less than 40 minutes, such as below 35 minutes, where the stress relaxation time and the factor B are measured by rheology at 180 °C.

In yet another embodiment, the resin composition, at mixing time, has a viscosity of from 10 to 10000, preferably from 100 to 5000, more preferably from 500 to 2000 mPas when measured at 25°C, wherein the viscosity is measured according to DIN EN ISO 3219 using a rotational rheometer in cone and plate configuration at a shear rate of 20 s⁻¹.

In yet another embodiment, the curing of the resin composition occurs by heating, preferably at a temperature above 25°C and below 200°C, and more preferably from 50°C to 150°C, such as at 80°C, 90°C, 100°C. Curing goes often faster at higher temperatures. It is also possible to cure stepwise e.g. first a period of time frame at one temperature and another time frame at higher or lower temperature.

### The curable composition

### Epoxy compound

The curable compositions comprise epoxy compounds. The epoxy compound comprises at least two, preferably two, epoxy groups. Suitable examples of the epoxy compounds are : diglycidyl ethers of bisphenol A, bisphenol F and bisphenol S, glycidyl ethers of the novolaks obtainable from phenol, cresol, bisphenol A, halogenated phenols; diglycidyl ether of tetrabromo bisphenol A, diglycidyl ether of tetrabromo bisphenol S; diglycidyl ethers of resorcinol and alkylated resorcinols, diglycidyl ether of hydroquinone, diglycidyl ether of 2,5-di-tertiary butyl hydroquinone, the diglycidyl ether of 4,4'- dihydroxy-3,3',5,5'-tetramethylbiphenyl, the diglycidyl ether of 1,6- dihydroxynaphthalene, the diglycidyl ether of 9,9'-bis(4-hydroxyphenyl)fluorene, the diglycidyl ether of the reaction product of glycidol and butylated catechol, diglycidyl ethers of 1,4- butanediol, 1,6-hexanediol, neopentyl glycol and dipropylene glycol, the triglycidyl ether of tris(p-hydroxyphenyl)methane, the tetraglycidyl ether of tetrakis(p- hydroxyphenyl)ethane, the triglycidyl ether of trimethylopropane, and mixtures thereof.

Further examples of glycidyl esters include, but are not limited to, diglycidyl ester of phthalic acid, diglycidyl ester of 1,2-cyclohexanedicarboxylic acid, diglycidyl ester of terephthalic acid, and mixtures thereof.

Further possible examples of epoxy compounds comprising at least two epoxy groups are butylenes diepoxide ; hexylene diepoxide; diglycidyl ether; diglycidyl thioether, and combinations thereof.

Other examples are diglycidyl ether of phenolphthalein ; a diglycidyl ether of a C12 -C14 alcohol; a polypropylene glycol diglycidyl ether; a bisphenol A diglycidyl ether-bisphenol A copolymer and mixtures thereof.

Other suitable examples are of epoxy compounds comprising at least two epoxy groups can be natural based epoxies. For example epoxidized vegetable oils such as epoxidized soybean oil, epoxidized linseed oil and epoxidized sunflower oil; cardanol based epoxy; sucrose based epoxy; lignin based epoxy; dicyclopentiadiene based epoxy; furan based epoxy; and mixtures thereof.

Most preferred are diepoxies diglycidyl ethers of bisphenol A, bisphenol F and diglycidyl ether of novolaks and mixture thereof.

### Polyamine

The curable compositions comprise polyamine compounds. The polyamine compounds are aliphatic, cycloaliphatic and/or aromatic polyamine compounds wherein each of them comprises at least 3, preferably 4 active amine hydrogens. As used herein, active amine hydrogens are hydrogens that are directly linked to the nitrogen atom. Preferably, the amine is a diamine have two primary amine groups and thus 4 active amine hydrogens.

Examples of aliphatic polyamines include, but are not limited to, ethylenediamine, diethylenetriamine, triethylenetetramine, trimethyl hexane diamine, hexamethylenediamine, N-(2-amino ethyl)- 1 ,3-propanediamine, N,N'- 1,2-ethanediylbis-1,3-propanediamine, dipropylenetriamine, tetraethylenepentamine, dipropylenetriamine, 2-methylpentamethylenediamine, 1,3-pentanediamine and reaction products of an excess of these amines with an epoxy resin, such as bisphenol A diglycidyl ether, polyoxypropylenediamine (JEFFAMINE D 230 230 57), polyoxypropylenetriamine (JEFFAMINE T 400), mono-hydroxyethyl diethylenetriamine, dicyandiamide, aminoethylethanolamine and mixtures thereof.

Examples of aromatic polyamines include, but are not limited to, m- xylylenediamine, and p-xylylenediamine, diaminodiphenylmethane, diaminodiphenylsulfone, Diethyltoluenediamine, benzylaminoproylamine and mixtures thereof.

Examples of cycloaliphatic polyamines include, but are not limited to, 1,3-bis(aminomethyl)cyclohexane, isophorone diamine, 1,2-diaminocyclohexane, piperazine, 4,4-diaminodicyclohexylmethane, N-aminoethylpiperazine, octahydro-4,7-methano- 1 H-indenedimethanamine, and 4,4'-methylenebiscyclohexaneamine, diaminocylohexane, cyclohexylaminopropylamine, dimethyldiamino-dicyclohexylmethane, bis-aminomethyl-dicylopentadiene, N-aminoethylpiperazine and mixtures thereof.

In a special embodiment the aliphatic, cycloaliphatic and/or an aromatic polyamine compounds comprise one or more ketal, acetal or orthoester functional groups. Composites made of resins comprising ketal, acetal or orthoester comprising polyamines, can be cleavable or dissolvable in specific chemical conditions, such as in aqueous acidic conditions, or solvent based acidic conditions. Such types of composites can be in particular useful in case one wishes to recycle the reinforcing material. Examples these ketal, acetal or orthoester comprising polyamines are e.g. describes in patent applications WO2015054698, WO2012071896, WO2013184827.

### Acrylate monomer

The curable compositions comprise further acrylate monomers comprising at least two, such as two, three, four acrylate groups. Preferably the acrylate monomers comprise two or three acrylate groups. It has been found that methacrylates are not preferred since mixtures of the polyamine compounds, epoxy compounds and methacrylates are less favorable for making a reprocessable cured resin.

As used herein the acrylate monomer, also called acrylate diluent, is a compound as commonly known in the art and often use as reactive diluent for polymers. Suitable examples of acrylate monomers having at least two acrylate groups are di- and triacrylated monomers such as 1,6-hexanediol diacrylate (HDDA), di or tri propylene glycol diacrylate (DPGDA, TPGDA), di or tri ethylene glycol diacrylate (DEGDA, TEGDA), 1,4-butanediol diacrylate, tetra propylene glycol diacrylate, tetra ethylene glycol diacrylate, tricylcodecane dimethanol diacrylate, neopentylglycol diacrylate and the ethoxylated and/or propoxylated derivates thereof, trimethylolpropanetriacrylate (TMPTA) and the ethoxylated and/or propoxylated derivatives thereof, glycerol triacrylate and the ethoxylated and/or propoxylated derivates thereof, pentaerythritoltriacrylate (PETIA) and the ethoxylated and/or propoxylated derivatives thereof, glyceroltriacrylate and the ethoxylated and/or propoxylated derivatives thereof, ditrimethylolpropane tetraacrylate, dianhydrohexitols diacrylates (like isosorbide diacrylate) and the ethoxylated and/or propoxylated derivatives thereof, bisphenol A diacrylate and the ethoxylated and/or propoxylated derivatives thereof, and mixtures thereof.

Most preferred are the di-, tri- and tetra-acrylates. Even more preferred are di- and triacrylates.

In a special embodiment the acrylate monomers comprise one or more ketal or acetal functional groups. Composites made of resins comprising such acrylate monomers can be cleavable or dissolvable in specific chemical conditions, such as in aqueous acidic conditions, or solvent based acidic conditions. Such types of composites can be in particular useful in case one wishes to recycle the reinforcing material.

Preferred examples are acrylate monomers comprising acetal or ketal groups selected from the group consisting of : 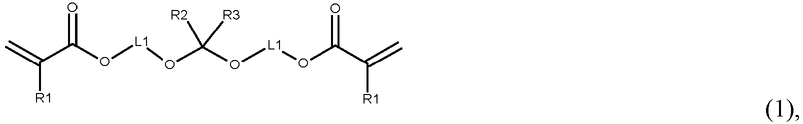 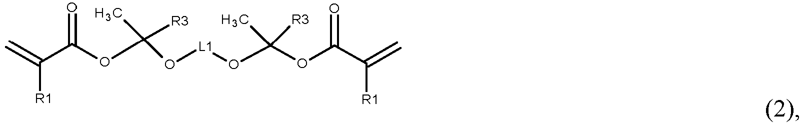 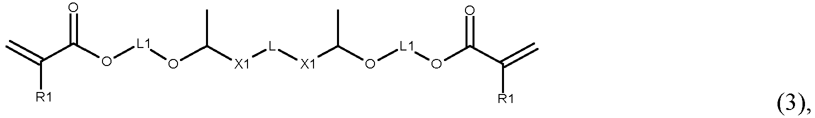 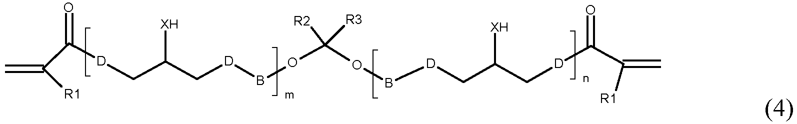 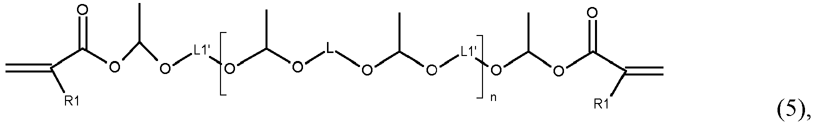 and mixtures thereof, wherein X¹ is selected from O, C(O)O; wherein C is directly bonded to L; R¹ is hydrogen; and L, L¹ and L^{1'}are independently selected from divalent linking moieties; D are independently selected from O; m is from 1 to 10; and n is from 1 to 10.

The divalent linking groups, typically have a molecular weight less than 100 g/mol. In some embodiments, the molecular weight is less 75 or 50 g/mol.

In some preferred embodiments, the divalent linking groups may be an (e.g., C₁-C₆) alkylene groups. In some embodiments the divalent linking group is a C₂, C₃, or C₄ alkylene group.

### Other compounds

The curable composition may further comprise other compounds such as accelerators, which may be used to increase the curing reaction. Examples or such accelerators are tertiary/quaternary amine compound, an imidazole compound, an inorganic base, or any combination of them. In some embodiments, the accelerator can be 2,4,6-tris(imethylaminomethyl)phenol, 2-ethyl-4-methylimidazole, 1-benzyl-2- methylimidazole, 1-cyanoethyl, tetra-n-butylammonium bromide, potassium hydroxide, sodium hydroxide, or any combination of the above, but not limited thereto.

### Reinforcing material

The reinforcing material can be any type of material that forms a composite when used together with a curable resin.

In one embodiment the reinforcing material is present in an amount from 5 to 95 wt% in view of the weight of the reprocessable composite, preferably from 20 to 90 wt% and more preferably from 70 to 90wt%.

In one embodiment the reinforcing material is select from the group consisting of synthetic inorganic fibers such as glass fibers and boron fibers; organic synthetic fibers such as carbon fibers, polyamide (polyaramid) fibers; natural fibers or biofibers such as plant-derived fibers (from wood, sisal, hemp, coconut, cotton, kenaf, flax, jute, bamboo), or nanofillers and/or mixtures thereof. Preferred reinforcing materials are glass fibers and/or carbon fibers. These fibers can also be chopped, short or long fibers.

Nanofillers are particles with a size ranging from 1 to 100 nm. In one embodiment, the nanofiller is selected from the group consisting of nanoclay, graphene, carbon nanotube, boron nitride, silicon dioxide, molybdenum disulfide, nanocellulose or mixtures thereof.

There are several methods to prepare the reprocessable composites known in the art. A skilled person know what method can be used and depends on the composite and the intended application of the composite. The reprocessable composites can be prepared by hand lay-up; spray-up (commonly used for chopped fibers); filament winding; pultrusion; resin transfer molding (RTM); vacuum infusion; autoclave molding; injection molding; or via 3D printing/additive manufacturing.

In a second aspect, the invention is related to a method for producing a reprocessed composite, comprising the steps of
- bringing the reprocessable composite of the first aspect to a higher temperature, preferably a temperature of at least 50 °C above the Tg of the cured resin;
- reprocessing the composite that is at a higher temperature;
- cooling to obtain the reprocessed composite.

The reprocessable composite can be brought to a higher temperature for a time that is sufficiently long to obtain the reprocessed material. Preferably the temperature is below 200°C. Reprocessing temperatures can be e.g. at 70, 80, 100, 120, 140,160, 180, 190°C. Typically, the time for reprocessing is shorter when higher temperatures are used. The cooling of the reprocessed composite, can be an active cooling process, or can be a step whereby the reprocessed composite is put at room temperature.

In one embodiment of this aspect the reprocessing comprises reshaping, embossing, welding, recycling or repairing.

In yet another embodiment the step of bringing the reprocessable composite to a higher temperature further comprises the application of an increased pressure such as a pressure of above 1 bar, such as above 10, 30 or 50 bar or even more.

In a third aspect, the invention is related to the reprocessed composite wherein the reprocessed composition is obtainable by a method of the second aspect of the invention. Typically the resins after reprocessing have comparable thermal and mechanical properties (glass transition temperature, modulus, tensile strength etc.) as compared to the resin before reprocessing. The chemical and mechanical properties of the reprocessed composites may be similar compared with the composite before reprocessing.

In another aspect, the invention is related to the use of the reprocessable composite according to the first aspect or the reprocessed composite of the third aspect in wind turbine blades, automotive components, public transportation vehicles reinforcing bars, components of marine infrastructure, boat hulls, bathtubs, swimming pool panels, aircraft wings, bicycle frames, sports equipment, electronic application, aeronautical components, aerospace components, consumer goods, structural adhesives, protective equipment or construction.

Yet another aspect is related to the curable resin composition comprising a mixture of an epoxy compound comprising at least two, preferably two, epoxy groups; an aliphatic, cycloaliphatic and/or an aromatic polyamine compound wherein each of them comprises at least 3, preferably 4 active amine hydrogens; an acrylate monomer comprising at least two, preferably two or three acrylate groups; wherein the equivalent ratio of the epoxy groups/ acrylate groups/ active amine hydrogens present in the mixture is between 0.8/0.2/1 and 0.2/0.8/1, preferably between 0.8/0.2/1 and 0.3/0.7/1. The preferred examples and features of the curable resin are those as described in the first aspect of the invention.

### Examples

### Materials

BADGE: Bisphenol A diglycidyl ether
BAC: 1,3-bis(aminomethyl)cyclohexane
HDDA: 1,6-Hexanediol diacrylate
TCDA: Tricyclodecanediol diacrylate
IPDA: Isophorone diamine
mXDA: m-xylenediamine
44MCH: 4,4'-Methylenebis cyclohexylamine
EB600:HDDA 60:40: Mixture of 60/40wt% of EBECRYL^{®}600 (from allnex) and HDDA
EB600:DPGDA 60:40: Mixture of 60/40wt% of EBECRYL^{®}600 (from allnex) and DPGDA
EBECRYL^{®}600: diacrylate ester of bisphenol A epoxy resin
TMPTA: Trimethylolpropane triacrylate
KetalDA: 2,2-di(2-acryloxyethoxy)propane prepared from reaction of one part of dimethoxypropane with two parts hydroxyethyl acrylate by transketalisation.
EB140 = EBECRYL^{®}140 : ditrimethylolpropane tetraacrylate
Ep/Ac/AH is the equivalent ratio of the epoxy groups/acrylate groups/active amine hydrogen

**Table 1: description of some samples.**

| **Sample code** | **Compound** |
|---|---|
| CD000 | BADGE:BAC neat resin |
| CD001 | BADGE:HDDA:BAC neat resin |
| CDxxx-CGF20 | + 20 w/w% chopped glass fibers |
| CDxxx-GF1L | + 1 layer of unidirectionally aligned glass fibers |

| | |
|---|---|
| where xxx stands for 000 or 001 | |

Sample preparation : after mixing the three compounds (or two for the reference example CD000) the mixture undergoes thermo-curing at 80 °C for 22 hrs, post-curing 140 °C for 30 mins (tbc).

In case chopped glass fibres are used, the glass fibres are mixed with the sample.

In case 1 layer of unidirectionally aligned glass fibres is used, the mixed resin was added on the glass fiber layer via hand lay-up.

### Methods

### Measuring of Tg

The glass transition temperature (Tg) was measured using differential scanning calorimetry (DSC, Mettler 823e) according to ASTM D3418.

The measurements were conducted using standard aluminum crucibles (40 µL) under a nitrogen flow of 50 mL min⁻¹. The sample mass was typically ≈10 mg. A preliminary heating run from -25 to 90°C was conducted to achieve optimal heat transfer between sample and crucible. Following a rapid cooling step, a second heating run was conducted from -60 to 180°C to determine the glass transition. The inflection point of the transition was returned as Tg value. For all runs, the heating rate was 10°C min⁻¹.

### Stress relaxation

Stress relaxation was measured following a rheology procedure. In this test, the shear stress response of a material was monitored over time at a fixed shear deformation. The measurements were conducted using a MCR302 rheometer in a parallel plate configuration and equipped with a ETD400 (P/H) temperature control. A sanded upper plate with a diameter of 8 mm was used. The gap was adjusted to fit a sample disc with a thickness in the range 1-2 mm and a cross section of 8 mm. After loading the sample at 180°C, a shear strain of 0.5% was applied and maintained for 120 min in isothermal conditions. The stress-relaxation data were fitted to an exponential expression of the form *G*(*t*) *= G*_{∞} *+* (*G*₀ *- G*_{∞})*e*^{*-t*/}*^{τ} = G*₀(*B +* (1 *- B*)*e*^{*-t*/*τ*}) in order to estimate the stress relaxation time τ and the parameter B which corresponds to the ratio of *G*_{∞}/*G*₀ where *G*₀ is the unrelaxed (initial) modulus at time zero and *G*_{∞} is the relaxed (final) modulus at infinite time. The ratio between initial and final modulus is provided by the inverse of *B* (namely *B*⁻¹ *= G*₀/*G*_{∞})*.*

**Table 2 : Overview of the tests performed on reference sample CD000 and example according to the invention CD001, without reinforcement (neat resin) or with reinforcing material as indicated.**

| **Test** | **Technique/conditions (T = 180°C unless specified)** | **Sample geometry** | **CD000** | **CD001** |
|---|---|---|---|---|
| **Stress relaxation** | Rheo: Sanded steel plate 8 mm | Disc (8×1 mm²) | Neat resin | Neat resin |
| | γ = 0.5%; F_{N} = 1-2 N | | | |
| **Hot embossing** | Rheo: Crosshatched steel plate 8 mm | Disc (8×1 mm²) | Neat resin | Neat resin |
| | F_{N}= 40N (≈ 0.8 MPa) | | | |
| **Glass transition (ASTM D3418)** | DSC: Heating -60 to 180°C at 10 K min⁻¹ | Disc (8×1 mm²) | Neat resin | Neat resin |
| **Hot bending** | UTM (3point-bending, v = 20 mm h⁻¹) | Beam (100×15×3 mm²) | Neat resin -CGF20 | Neat resin -CGF20 |
| | Recovery for 1h δ_{mid} measurement at 23°C | | | |
| **Hot joint formation (welding)** | UTM Contact: Fₘₐₓ ≈ 2 kN (3.2 MPa) for 1h | Beam (100×25×3 mm²) Overlap area 25×25 mm² | Neat resin -GF1L | Neat resin -GF1L |
| **Single lap shear strength (ASTM D5868)** | UTM | Beam (100×25×3 mm²) Overlap area 25×25 mm² | Neat resin -GF1L | Neat resin -GF1L |
| | T = 23°C, v = 1.25 mm min⁻¹ | | | |

Lexicon:
Rheo: Rheometer Anton Paar MCR302 (y = shear strain, F_{N} = normal force)
DSC: Differential scanning calorimeter DSC Mettler 823e
UTM: Universal testing machine Zwick Z010 (v = cross-head speed, Fₘₐₓ = contact force, δ_{mid} = deflection at mid span of bended beam)

### Results

### 1. Experiments on neat resins

### Sample preparation

Several neat samples are prepared using the equivalent ratio as described in the table and using the amounts (in grams) as indicated in the tables

| | **CD000** | **CD001** | **CD002** | **CD003** | **CD004** | **CD005** | **CD006** | **CD007** | **CD008** |
|---|---|---|---|---|---|---|---|---|---|
| Ep/Ac/AH | 1/0/ 1 | 0.5/0.5 /1 | 0.3/0.7 /1 | 0.3/0.7 /1 | 0.5/0.5 /1 | 0.5/0.5 /1 | 0.5/0.5 /1 | 0.3/0.7 /1 | 0.3/0.7/ 1 |
| BADGE | 340 | 170 | 102 | 102 | 170 | 170 | 170 | 102 | 102 |
| HDDA | | 113 | 158 | | 113 | 113 | 113 | 158 | |
| TCDA | | | | 213 | | | | | 213 |
| BAC | 71 | 71 | 71 | 71 | | | | | |
| IPDA | | | | | 85 | | | | |
| mXDA | | | | | | 68 | | | |
| 44MCH | | | | | | | 105 | 105 | 105 |

**Table 3: overview of sample preparation**

| | **CD009** | **CD010** | **CD011** | **CD012** | **CD013** | **CD016** | **CD017** | **CD018** | **CD019** |
|---|---|---|---|---|---|---|---|---|---|
| Ep/Ac/AH | 0.5/0. 5/ 1 | 0.7/0. 3/ 1 | 0.5/0. 5/ 1 | 0.5/0. 5/ 1 | 0.5/0. 5/ 1 | 0.5/0. 5/ 1 | 0.7/0. 3/ 1 | 0.5/0. 5/ 1 | 0.7/0. 3/ 1 |
| BADGE | 170 | 238 | 170 | 170 | 170 | 170 | 238 | 170 | 238 |
| | | | | | | | | | |
| HDDA | | 67 | | | | | | | |
| TCDA | 154 | | | | | | | | |
| EB600:HDD A | | | 154 | | | | | | |
| 60:40 | | | | | | | | | |
| EB600:DPG DA | | | | 163 | | | | | |
| 60:40 | | | | | | | | | |
| KetalDA | | | | | 133 | | | | |
| TMPTA | | | | | | 107 | 64 | | |
| EB140 | | | | | | | | 124 | 74 |
| BAC | 71 | 71 | 71 | 71 | 71 | 71 | 71 | 71 | 71 |

### Experiments on cured neat samples

**Table 4: Results for the measured Tg values, the stress relaxation time and the reciprocal of the B factor for the cured samples.**

| Ep:Ac:AH | BADGE | Acrylate | | Amine | | T_{g} (°C) | τ (min) | B⁻¹ |
|---|---|---|---|---|---|---|---|---|
| | Ep | Ac | | AH | | | | |
| CD000 | 1 | 0 | HDDA | 1 | BAC | 127 | 70.1 | 5 |
| CD001 | 0.5 | 0.5 | HDDA | 1 | BAC | 65 | 9.0 | 17 |
| CD002 | 0.3 | 0.7 | HDDA | 1 | BAC | 32 | 18.9 | 14 3 |
| CD003 | 0.3 | 0.7 | TCDA | 1 | BAC | 68 | 15.4 | 8 |
| CD004 | 0.5 | 0.5 | HDDA | 1 | IPDA | 58 | 6.52 | 10 |
| CD005 | 0.5 | 0.5 | HDDA | 1 | mXDA | 52 | 33.4 | 10 |
| CD006 | 0.5 | 0.5 | HDDA | 1 | MCHA | 65 | 5.31 | 8 |
| CD007 | 0.3 | 0.7 | HDDA | 1 | MCHA | 20 | 4.64 | 40 |
| CD008 | 0.3 | 0.7 | TCDA | 1 | MCHA | 57 | 7.27 | 24 |
| CD009 | 0.5 | 0.5 | TCDA | 1 | BAC | 91 | 27.7 | 13 |
| CD010 | 0.7 | 0.3 | HDDA | 1 | BAC | 98 | 16.6 | 2 |
| CD011 | 0.5 | 0.5 | EB600: HDDA 60:40 | 1 | BAC | 81 | 11.5 | 3 |
| CD012 | 0.5 | 0.5 | EB600: DPGDA 60:40 | 1 | BAC | 77 | 9.6 | 5 |
| CD013 | 0.5 | 0.5 | ketalDA | 1 | BAC | 59 | 7.7 | 14 |
| CD016 | 0.5 | 0.5 | TMPTA (3) | 1 | BAC | 105 | 11.8 | 7 |
| CD017 | 0.7 | 0.3 | TMPTA (3) | 1 | BAC | 110 | 11.1 | 3 |
| CD018 | 0.5 | 0.5 | EB140 (4) | 1 | BAC | 107 | 35.4 | 6 |
| CD019 | 0.7 | 0.3 | EB140 (4) | 1 | BAC | 112 | 9.8 | 5 |

The stress relaxation time τ is much lower for the samples comprising acrylates. In general, a faster stress relaxation provides better reprocessable cured resins. Also the inverse of the factor B provides good reprocessable and reprocessed material when the value is higher. A combination of high B⁻¹ and a short relaxation time are the most preferred materials for reprocessing.

### Hot embossing on cured samples

Embossing was tested using a MCR302 (Anton Paar) rheometer fitted with a 8mm crosshatched upper plate PP08/P2. Samples of 1-2mm thick were loaded between the plates at 180°C and compressed for 1 hour using a normal force of 40 N. After this step, the samples were cooled and inspected by optical microscopy to identify any trace left from the crosshatch on the sample surface.

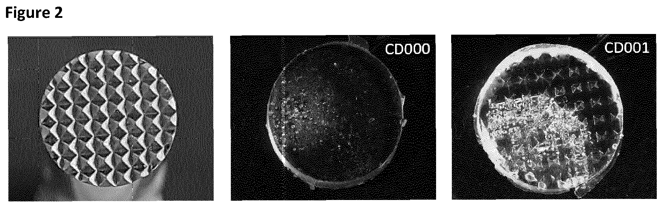

Embossing of the cross-hatch is much better for the CD001 sample compared to the reference example CD000 (cf. Figure 2).

### 2. Experiments on samples comprising glass fibers (composites)

### Hot bending

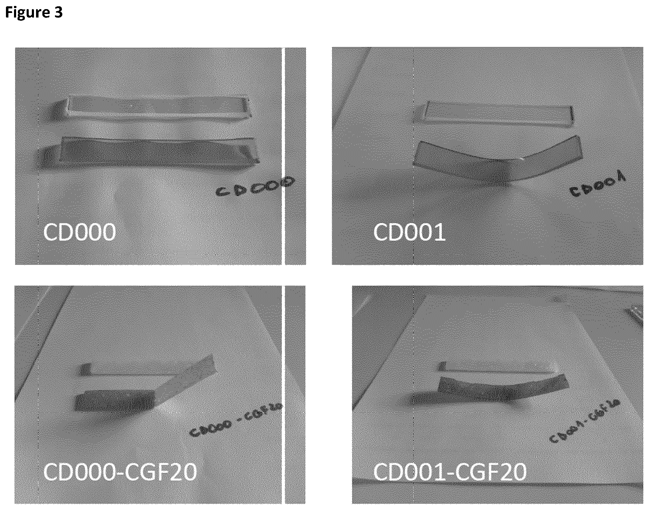

Figure 3 shows the results of the samples comprising 20wt% chopped fibers (CD000-CGF20 and CD001-CGF20) and neat fibers of CD000 and CD001 after hot bending at 180°C using the Zwick Z010 universal testing machine equipped with a load cell of 2500N fitted in a heating chamber. The sample dimensions were 110 × 15 × 2.5 mm³. Experiments were conducted in 3-point bending mode with a span of 80 mm between the supporting pins. The sample was bended at a cross-head speed of 20 mm h⁻¹ up to a maximum deflection of 20 mm. Next the load was removed and the sample was left unloaded for one hour at 180°C.

Back to room temperature, no deformation (bending) is finally observed for the neat resin CD000 while permanent deformation is observed for the neat resin CD001. This demonstrates a relaxation effect in CD001 and the reprocessability or vitrimer behaviour of CD001.

Upon bending, failure was observed for the chopped glass fiber composite CD000-CGF20 while deformation without failure was observed in chopped glass fiber composite CD001-CGF20 demonstrating the stress relaxation in the latter showing that the composite is reprocessable and has vitrimer behaviour.

**Table 5: Mid-span deflection δ_{mid} following the hot-bending step and a recovery period of 1 h at 180°C.**

| Sample # | δ_{mid} at start | δ_{mid} after run | Visual failure |
|---|---|---|---|
| | mm | mm | |
| CD000-neat | 1.5 | 2.5 | no |
| CD000-CGF20 | 1 | 19 | yes |
| CD001-neat | 1.5 | 24 | no |
| CD001-GF-1 layer | 1 | 11 | no |

### Hot joint formation (welding) - Lap Shear Strength (ASTM D5868)

Reference sample CD000 and CD001 both neat resin and both comprising fibers (composites) are welded and tested for their lap shear strength. After sanding the respective faces, two samples of the cured resins with dimensions of 100 × 25 × 2 mm³ were brought in contact over a length of 25 mm defining an overlap area of 25 × 25 mm². In order to form a bonded joint, the two overlapping faces were next pressed together at 180 °C under a load of 1.8 kN over a period of 60 min.

**Table 6: shows the force at break and the corresponding lap shear strength of the reference CD000 and the example CD001 both as neat resin and as composite comprising fibers.**

| According to ASTM D5868, the welded samples were subsequently tested for lap shear strength using a Zwick Z010 universal testing machine at 23°C with a cross-head speed of 1.25mm/min with a load cell of 2.5kN (Figure 5).Sample | Force at break | Lap shear strength |
|---|---|---|
| | (N) | (MPa) |
| CD000-neat | 450 | 0.7 |
| CD000-CGF20 | 270 | 0.4 |
| CD000-GF-1 layer | 800 | 1.3 |
| CD001-neat | >2500 | >4 |
| CD001-GF-1 layer | 9800 | 14.8 |

The lap shear strength is significantly higher in CD001 than in CD000 and the lap shear strength is significantly higher in the composites of CD001-GF-1L than in CD000-GF-1L

## Claims

1. A reprocessable composite comprising a reinforcing material and a cured resin material, wherein the cured resin material is obtainable by curing a resin composition comprising a mixture of
• epoxy compounds comprising at least two, preferably two, epoxy groups;
• aliphatic, cycloaliphatic and/or an aromatic polyamine compounds wherein each of them comprises at least 3, preferably 4 active amine hydrogens;
• an acrylate monomers comprising at least two, preferably two or three acrylate groups;
wherein the equivalent ratio of the epoxy groups/ acrylate groups/ active amine hydrogens present in the mixture is between 0.8/0.2/1 and 0.2/0.8/1 respectively, preferably between 0.8/0.2/1 and 0.3/0.7/1.

2. The composite according to claim 1, wherein the cured resin material has a Tg of at least 20°C, preferably at least 50°C, wherein the Tg is measured with differential scanning calorimetry according to ASTM D 3418.

3. The composite according to claim 1 or 2, wherein the cured resin material has a stress relaxation time τ of less than 40 minutes, where the stress relaxation time is measured by rheology at 180 °C.

4. The composite according to claim 3, wherein the cured resin material has a reciprocal value *B*⁻¹ of 2 or more, preferably 5 or more, wherein the value B corresponds to the ratio of *G*_{∞}/*G*₀ where *G*₀ is the unrelaxed (initial) modulus at time zero and *G*_{∞} is the relaxed modulus at infinite time when measured by rheology at 180°C.

5. The composite according to anyone of the claims 1 to 4, wherein the resin composition at mixing time has a viscosity of from 10 to 10000, preferably from 100 to 5000, more preferably from 500 to 2000 mPas when measured at 25°C, wherein the viscosity is measured according to DIN EN ISO 3219 using a rotational rheometer in cone and plate configuration at a shear rate of 20 s⁻¹.

6. The composite according to anyone of the claims 1 to 5, wherein the curing of the resin composition occurs by heating, preferably at a temperature above 25°C and below 200°C, and more preferably from 50°C to 150°C, such as 80°C.

7. The composite according to anyone of the claims 1 to 6, wherein the acrylate monomers comprise one or more ketal or acetal functional groups.

8. The composite according to claim 7, wherein the acrylate monomers comprising one or more ketal or acetal functional groups are selected from 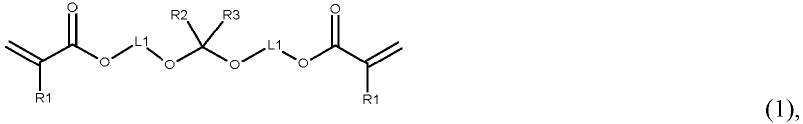 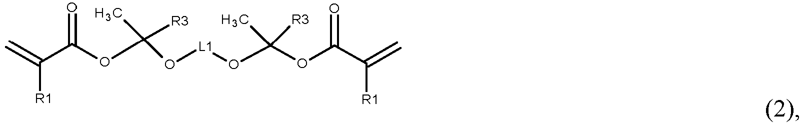 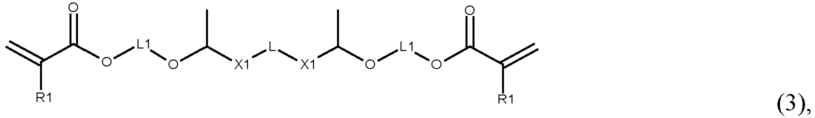 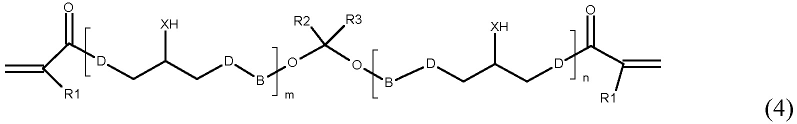 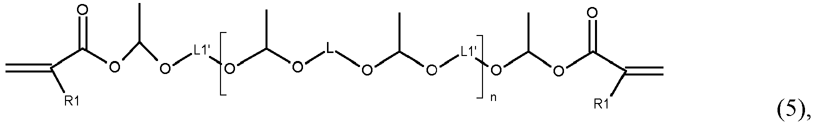 wherein X¹ is selected from O, C(O)O; wherein C is directly bonded to L; R¹ is hydrogen; and L, L¹ and L^{1'}are independently selected from divalent linking moieties; D are independently selected from O; m is from 1 to 10; and n is from 1 to 10.

9. The composite according to anyone of the claims 1 to 8, wherein the aliphatic, cycloaliphatic and/or an aromatic polyamine compounds comprise one or more ketal, acetal or orthoester functional groups.

10. The composite according to anyone of the claims 1 to 9, wherein the reinforcing material is present in an amount from 5 to 95 wt% in view of the weight of the reprocessable composite, preferably from 20 to 90 wt% and more preferably from 70 to 90wt%.

11. The composite according to anyone of the claims 1 to 10, wherein the reinforcing material is selected from the group consisting of inorganic synthetic fibers such as glass fibers and boron fibers; organic synthetic fibers such as carbon fibers, polyamide (polyaramid) fibers; natural fibers or biofibers such as plant-derived fibers (from wood, sisal, hemp, coconut, cotton, kenaf, flax, jute, bamboo), or nanofillers and/or mixtures thereof.

12. The composite according to anyone of the claim 11, wherein the nanofiller is selected from the group consisting of nanoclay, graphene, carbon nanotube, boron nitride, silicon dioxide, molybdenum disulfide, nanocellulose or mixtures thereof.

13. Method for producing a reprocessed composite, comprising the steps of
• bringing the reprocessable composite according to any one of claims 1 to 12 to a higher temperature, preferably a temperature of at least 50 °C above the Tg of the cured resin;
• reprocessing the composite that is at a higher temperature;
• cooling to obtain the reprocessed composite.

14. Method according to claim 13, wherein the reprocessing comprises reshaping, embossing, welding, recycling or repairing.

15. Method according to claim 13 or 14, wherein the step of bringing the composite to a higher temperature further comprises the application of an increased pressure such as a pressure of above 1 bar, such as above 10 bar or more.

16. Reprocessed composite wherein the reprocessed composition is obtainable by a method according to claim 13 to 15.

17. Use of the reprocessable composite according to anyone of the claims 1 to 12, or the reprocessed composite according to claim 16 in wind turbine blades, automotive components, public transportation vehicles, reinforcing bars, components of marine infrastructure, boat hulls, bathtubs, swimming pool panels, aircraft wings, bicycle frames, sports equipment, electronic application, aeronautical components, aerospace components, consumer goods, structural adhesives, protective equipment or construction.

18. A curable resin composition comprising a mixture of an epoxy compounds comprising at least two, preferably two, epoxy groups; aliphatic, cycloaliphatic and/or an aromatic polyamine compounds wherein each of them comprises at least 3, preferably 4 active amine hydrogens; acrylate monomers comprising at least two, preferably two or three acrylate groups; wherein the equivalent ratio of the epoxy groups/ acrylate groups/ active amine hydrogens present in the mixture is between 0.8/0.2/1 and 0.2/0.8/1, preferably between 0.8/0.2/1 and 0.3/0.7/1.

## Patentansprüche

1. Wiederverarbeitbarer Verbundstoff, der ein Verstärkungsmaterial und ein gehärtetes Harzmaterial umfasst, wobei das gehärtete Harzmaterial durch Härten einer Harzzusammensetzung erhältlich ist, die ein Gemisch aus
• Epoxidverbindungen, umfassend mindestens zwei, vorzugsweise zwei Epoxygruppen;
• aliphatischen, cycloaliphatischen und/oder aromatischen Polyaminverbindungen, wobei jede von diesen mindestens 3, vorzugsweise 4 aktive Aminwasserstoffe umfasst;
• Acrylatmonomeren, umfassend mindestens zwei, vorzugsweise zwei oder drei Acrylatgruppen,
umfasst;
wobei das Äquivalentverhältnis der Epoxygruppen/Acrylatgruppen/aktiven Aminwasserstoffen, die in dem Gemisch vorliegen, zwischen 0,8/0,2/1 bzw. 0,2/0,8/1, vorzugsweise zwischen 0,8/0,2/1 und 0,3/0,7/1 liegt.

2. Verbundstoff nach Anspruch 1, wobei das gehärtete Harzmaterial eine Tg von mindestens 20 °C, vorzugsweise mindestens 50 °C aufweist, wobei die Tg mit Differenzialscanningkalorimetrie gemäß ASTM D 3418 gemessen wird.

3. Verbundstoff nach Anspruch 1 oder 2, wobei das gehärtete Harzmaterial eine Entspannungszeit τ von weniger als 40 Minuten hat, wobei die Entspannungszeit durch Rheologie bei 180 °C gemessen wird.

4. Verbundstoff nach Anspruch 3, wobei das gehärtete Harzmaterial einen Reziprokwert *B*⁻¹ von 2 oder mehr, vorzugsweise 5 oder mehr aufweist, wobei der Wert *B* dem Verhältnis *G*_{∞}/*G*₀ entspricht, wobei *G*₀ der nicht entspannte (Initial-) Modul zur Zeit null ist und *G*_{∞} der entspannte Modul zur unendlichen Zeit ist, gemessen durch Rheologie bei 180 °C.

5. Verbundstoff nach einem der Ansprüche 1 bis 4, wobei die Harzzusammensetzung bei der Mischzeit eine Viskosität von 10 bis 10.000, vorzugsweise von 100 bis 5.000, stärker bevorzugt von 500 bis 2.000 mPas, gemessen bei 25 °C, aufweist, wobei die Viskosität gemäß DIN EN ISO 3219 unter Verwendung eines Rotationsrheometers in Konus-Platte-Konfiguration bei einer Scherrate von 20 s⁻¹ gemessen wird.

6. Verbundstoff nach einem der Ansprüche 1 bis 5, wobei das Härten der Harzzusammensetzung durch Erwärmen, vorzugsweise bei einer Temperatur über 25 °C und unter 200 °C und stärker bevorzugt von 50 °C bis 150 °C, wie 80 °C, stattfindet.

7. Verbundstoff nach einem der Ansprüche 1 bis 6, wobei die Acrylatmonomere eine oder mehrere funktionelle Ketal- oder Acetal-Gruppen umfassen.

8. Verbundstoff nach Anspruch 7, wobei die Acrylatmonomere, die eine oder mehrere funktionelle Ketal- oder Acetal-Gruppen umfassen, aus 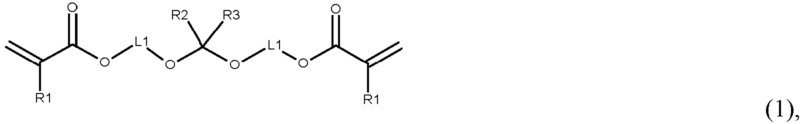 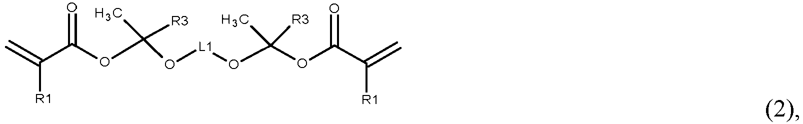 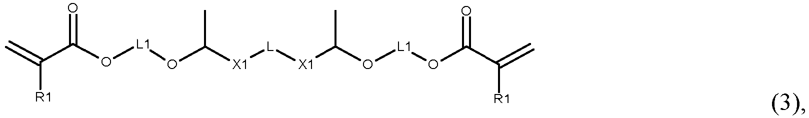 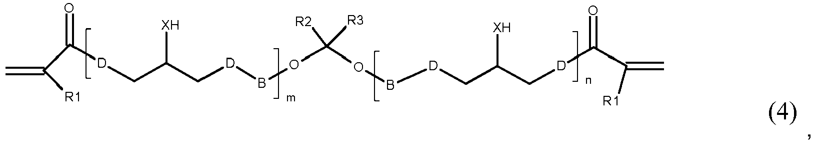 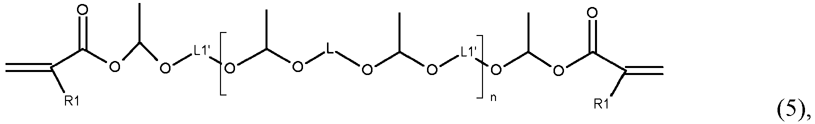
ausgewählt sind,
wobei X¹ aus O, C(O)O ausgewählt ist; wobei C direkt an L gebunden ist; R¹ Wasserstoff ist und L, L¹ und L^{1'} unabhängig voneinander aus zweiwertigen Verknüpfungseinheiten ausgewählt sind; D unabhängig voneinander aus O ausgewählt sind; m 1 bis 10 ist und n 1 bis 10 ist.

9. Verbundstoff nach einem der Ansprüche 1 bis 8, wobei die aliphatischen, cycloaliphatischen und/oder aromatischen Polyaminverbindungen eine oder mehrere funktionelle Ketal-, Acetal- oder Orthoester-Gruppen umfassen.

10. Verbundstoff nach einem der Ansprüche 1 bis 9, wobei das Verstärkungsmaterial in einer Menge von 5 bis 95 Gew.-%, basierend auf dem Gewicht des wiederverarbeitbaren Verbundstoffes, vorzugsweise 20 bis 90 Gew.-% und stärker bevorzugt 70 bis 90 Gew.-%, vorliegt.

11. Verbundstoff nach einem der Ansprüche 1 bis 10, wobei das Verstärkungsmaterial aus der Gruppe ausgewählt ist, die aus anorganischen synthetischen Fasern, wie Glasfasern und Borfasern; organischen synthetischen Fasern, wie Kohlefasern, Polyamid (Polyaramid)-fasern; natürlichen Fasern oder Biofasern, wie von Pflanzen stammenden Fasern (Holz, Sisal, Hanf, Kokosnuss, Baumwolle, Kenaf, Flachs, Jute, Bambus) oder Nanofüllstoffen und/oder Gemischen davon besteht.

12. Verbundstoff nach Anspruch 11, wobei der Nanofüllstoff aus der Gruppe ausgewählt ist, die aus Nano-Ton, Graphit, Kohlenstoffnanoröhrchen, Bornitrid, Siliciumdioxid, Molybdändisulfid, Nanocellulose oder Gemischen davon besteht.

13. Verfahren zur Herstellung eines wiederverarbeitbaren Verbundstoffes, umfassend die Schritte
• Bringen des wiederverarbeitbaren Verbundstoffes nach einem der Ansprüche 1 bis 12 auf eine höhere Temperatur, vorzugsweise eine Temperatur von mindestens 50 °C über der Tg des gehärteten Harzes;
• Wiederverarbeiten des Verbundstoffes, der eine höhere Temperatur hat;
• Abkühlen unter Erhalt des wiederverarbeiteten Verbundstoffes.

14. Verfahren nach Anspruch 13, wobei das Wiederverarbeiten Umformen, Prägen, Schweißen, Recycling oder Reparieren umfasst.

15. Verfahren nach Anspruch 13 oder 14, wobei der Schritt des Bringens des Verbundstoffes auf eine höhere Temperatur ferner das Anlegen eines erhöhten Druckes, wie eines Druckes über 1 bar, wie über 10 bar oder mehr, umfasst.

16. Wiederverarbeiteter Verbundstoff, wobei der wiederverarbeitete Verbundstoff durch ein Verfahren nach Anspruch 13 bis 15 erhältlich ist.

17. Verwendung des wiederverarbeitbaren Verbundstoffes nach einem der Ansprüche 1 bis 12 oder des wiederverarbeiteten Verbundstoffes nach Anspruch 16 für Windturbinenschaufeln, Automobilkomponenten, öffentliche Verkehrsmittel, Armierungsstäbe, Komponenten der Marineinfrastruktur, Bootsrümpfe, Badewannen, Swimmingpool-Planen, Flugzeugflügel, Fahrradrahmen, Sportausrüstung, elektronische Anwendungen, Luftfahrtkomponenten, Raumfahrtkomponenten, Konsumgüter, Strukturklebstoffe, Schutzausrüstung oder den Bau.

18. Härtbare Harzzusammensetzung, umfassend ein Gemisch aus Epoxidverbindungen, umfassend mindestens zwei, vorzugsweise zwei, Epoxygruppen; aliphatischen, cycloaliphatischen und/oder aromatischen Polyaminverbindungen, wobei jede von diesen mindestens 3, vorzugsweise 4 aktive Aminwasserstoffe umfasst; Acrylatmonomeren, umfassend mindestens zwei, vorzugsweise zwei oder drei Acrylatgruppen; wobei das Äquivalentverhältnis der Epoxygruppen/Acrylatgruppen/aktiven Aminwasserstoffen, die in dem Gemisch vorliegen, zwischen 0,8/0,2/1 bzw. 0,2/0,8/1, vorzugsweise zwischen 0,8/0,2/1 und 0,3/0,7/1 liegt.

## Revendications

1. Composite retraitable comprenant un matériau de renforcement et un matériau de résine durcie, dans lequel le matériau de résine durcie peut être obtenu par durcissement d'une composition de résine comprenant un mélange de
• composés époxy comprenant au moins deux, de préférence deux, groupes époxy ;
• composés polyamine aliphatique, cycloaliphatique et/ou aromatique dans lesquels chacun d'eux comprend au moins 3, de préférence 4 hydrogènes d'amine actifs ;
• monomères acrylate comprenant au moins deux, de préférence deux ou trois groupes acrylate ;
dans laquelle le rapport d'équivalents des groupes époxy/groupes acrylate/hydrogènes d'amine actifs présents dans le mélange est compris entre 0,8/0,2/1 et 0,2/0,8/1, respectivement, de préférence entre 0,8/0,2/1 et 0,3/0,7/1.

2. Composite selon la revendication 1, dans lequel le matériau de résine durcie a une Tg d'au moins 20 °C, de préférence d'au moins 50 °C, dans lequel la Tg est mesurée par calorimétrie différentielle à balayage selon la norme ASTM D 3418.

3. Composite selon la revendication 1 ou 2, dans lequel la résine durcie a un temps de relaxation de contrainte τ inférieur à 40 minutes, où le temps de relaxation de contrainte est mesuré par rhéologie à 180 °C.

4. Composite selon la revendication 3, dans lequel le matériau de résine durcie a une valeur réciproque B⁻¹ de 2 ou plus, de préférence 5 ou plus, dans lequel la valeur B correspond au rapport G_{∞}/G₀ où *G*₀ est le module non relaxé (initial) au temps zéro et G_{∞} est le module relaxé au temps infini lorsqu'il est mesuré par rhéologie à 180 °C.

5. Composite selon l'une quelconque des revendications 1 à 4, dans lequel la composition de résine au moment du mélange a une viscosité de 10 à 10 000, de préférence de 100 à 5 000, plus préférablement de 500 à 2 000 mPas lorsqu'elle est mesurée à 25 °C, dans lequel la viscosité est mesurée selon la norme DIN EN ISO 3219 à l'aide d'un rhéomètre rotatif en configuration cône et plaque à une vitesse de cisaillement de 20 s⁻¹.

6. Composite selon l'une quelconque des revendications 1 à 5, dans lequel le durcissement de la composition de résine a lieu par chauffage, de préférence à une température supérieure à 25 °C et inférieure à 200 °C, et plus préférablement de 50 °C à 150 °C, telle que 80 °C.

7. Composite selon l'une quelconque des revendications 1 à 6, dans lequel les monomères acrylate comprennent un ou plusieurs groupes fonctionnels cétal ou acétal.

8. Composite selon la revendication 7, dans lequel les monomères acrylate comprenant un ou plusieurs groupes fonctionnels cétal ou acétal sont choisis parmi 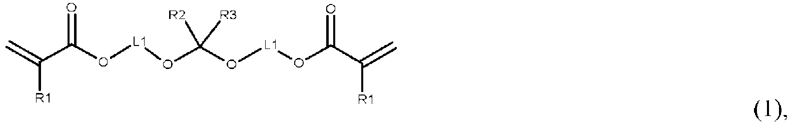 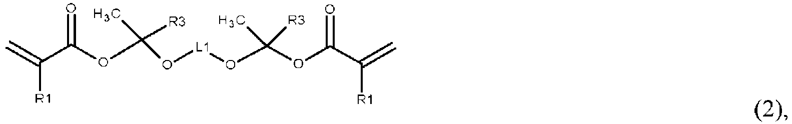 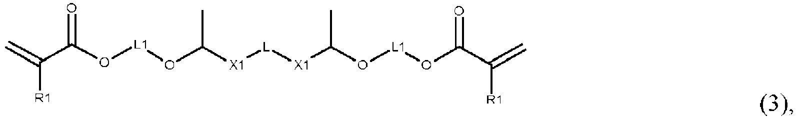 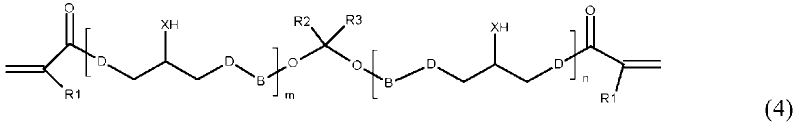 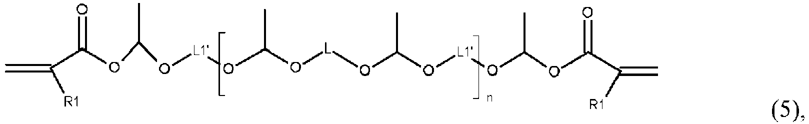 dans lequel X¹ est choisi parmi O, C(O)O ; dans lequel C est directement lié à L ; R¹ est hydrogène ; et L, L¹ et L^{1'} sont choisis indépendamment parmi des groupes de liaison divalents ; D sont choisis indépendamment parmi O ; m est de 1 à 10 ; et n est de 1 à 10.

9. Composite selon l'une quelconque des revendications 1 à 8, dans lequel les composés polyamine aliphatique, cycloaliphatique et/ou aromatique comprennent un ou plusieurs groupes fonctionnels cétal, acétal ou orthoester.

10. Composite selon l'une quelconque des revendications 1 à 9, dans lequel le matériau de renforcement est présent en une quantité de 5 à 95 % en poids par rapport au poids du composite retraitable, de préférence de 20 à 90 % en poids et plus préférablement de 70 à 90 % en poids.

11. Composite selon l'une quelconque des revendications 1 à 10, dans lequel le matériau de renforcement est choisi dans le groupe constitué des fibres synthétiques inorganiques telles que les fibres de verre et les fibres de bore ; des fibres synthétiques organiques telles que les fibres de carbone, les fibres de polyamide (polyaramide) ; des fibres naturelles ou biofibres telles que les fibres dérivées de plantes (bois, sisal, chanvre, noix de coco, coton, kénaf, lin, jute, bambou), ou des nanocharges et/ou des mélanges de celles-ci.

12. Composite selon l'une quelconque des revendications 11, dans lequel la nanocharge est choisie dans le groupe constitué de la nanoargile, du graphène, du nanotube de carbone, du nitrure de bore, du dioxyde de silicium, du disulfure de molybdène, de la nanocellulose ou des mélanges de ceux-ci.

13. Procédé de production d'un substrat retraité, comprenant les étapes de
• chauffage du composite retraitable selon l'une quelconque des revendications 1 à 12 jusqu'à une température plus élevée, de préférence une température d'au moins 50 °C au-dessus de la Tg de la résine durcie ;
• le retraitement du composite qui est à une température plus élevée ;
• le refroidissement pour obtenir le composite retraité.

14. Procédé selon la revendication 13, dans lequel le retraitement comprend un reformage, un gaufrage, un soudage, un recyclage ou une réparation.

15. Procédé selon la revendication 13 ou 14, dans lequel l'étape de chauffage du composite à une température plus élevée comprend en outre l'application d'une pression accrue telle qu'une pression supérieure à 1 bar, telle que supérieure à 10 bars ou plus.

16. Composite retraité dans lequel la composition retraitée peut être obtenue par un procédé selon la revendication 13 à 15.

17. Utilisation du composite retraitable selon l'une quelconque des revendications 1 à 12, ou du composite retraité selon la revendication 16, dans des pales d'éoliennes, des composants automobiles, des véhicules de transport en commun, des barres de renforcement, des composants d'infrastructures marines, des coques de bateaux, des baignoires, des panneaux de piscine, des ailes d'avion, des cadres de bicyclettes, des équipements sportifs, des applications électroniques, des composants aéronautiques, des composants aérospatiaux, des biens de consommation, des adhésifs structuraux, des équipements de protection ou la construction.

18. Composition de résine durcissable comprenant un mélange de composés époxy comprenant au moins deux, de préférence deux, groupes époxy ; composés polyamine aliphatique, cycloaliphatique et/ou aromatique, dans laquelle chacun d'eux comprend au moins 3, de préférence 4 hydrogènes d'amine actifs ; monomères acrylate comprenant au moins deux, de préférence deux ou trois groupes acrylate ; dans laquelle le rapport d'équivalents des groupes époxy/groupes acrylate/hydrogènes d'amine actifs présents dans le mélange sont compris entre 0,8/0,2/1 et 0,2/0,8/1, de préférence entre 0,8/0,2/1 et 0,3/0,7/1.
